# EUROPEAN PATENT APPLICATION

(11) **EP 0 615 788 A1**
(43) Date of publication of application: **21.09.1994**
(21) Application number: 94103810.1
(22) Date of filing: 11.03.1994
(51) Int. Cl.: B05D 5/06, G02B 5/124, C09D 175/04

(54) **Retroreflective article clear coats**

(30) Priority: 12.03.1993 US 30672
(71) Applicant: MINNESOTA MINING AND MANUFACTURING COMPANY, St. Paul, Minnesota 55133-3427 (US)
(72) Inventor: Watkins, Robert F., c/o Minnesota Mining and, St. Paul, Minnesota 55133-3427 (US); Orensteen, Bruce D., c/o Minnesota Mining and, St. Paul, Minnesota 55133-3427 (US); Zwack, Joseph R., c/o Minnesota Mining and, St. Paul, Minnesota 55133-3427 (US)
(74) Representative: VOSSIUS & PARTNER

(57) **Abstract**

A method for forming clear coats on retroreflective articles utilizing an aqueous coating composition comprising water, water-borne dispersion of polyurethane, and cross-linker, and optionally acrylic emulsion. Also retroreflective articles formed according to the method and a preferred liquid coating composition for use in the method and in making the articles.

## Description

The present invention relates to a method for forming a protective clear coat on retroreflective articles such as license plates, signs, etc. The invention also relates to articles produced by the method. The invention also relates to a class of coating compositions useful in forming protective clear coats on retroreflective articles.

Coating compositions for formation of transparent clear coats on retroreflective sheetings have been used for some time. For example, liquid coating compositions have been used to form a clear coat on license plates after graphics have been applied to the face of the plate and to form a clear coat on retroreflective sheetings prior to application of graphics thereto. The clear coats are sometimes used to complete the optical relationships desired for optimal retroreflective efficiency. They are also sometimes used to protect underlying elements of the construction from environmental degradation by blocking ultraviolet radiation and sealing out moisture. It is typically desirable that the clear coat resist abrasion during shipping and handling (e.g., during plate or sign manufacture), resist abrasion due to sand and gravel, protect the article from degradation due to cleaning agents, withstand degradation due to insect and dirt accumulation, and resist yellowing upon aging and/or exposure to ambient conditions, e.g., weather and ultraviolet exposure.

Many previously known coating compositions contain substantial quantities of organic solvents, e.g., xylene and butanol. Because these solvents are released to the ambient atmosphere during coating and drying operations, thereby presenting a pollution source and environmental hazard, complex and expensive environmental control systems must often be used. Their odor is considered objectionable and they also present a fire hazard.

In some instances such as validation stickers, it is desirable to provide the clear coat over the individual or vehicle specific information to protect the information. Thus, many issuing authorities would prefer to have the clear coat applied after the individual information is printed on the base sheet. Some liquid compositions, however, contain solvents that can undesirably degrade a retroreflective base sheet, e.g., causing it to wrinkle or warp, lose structural integrity or strength, or exhibit reduced dimensional stability. This problem can be exacerbated because many validation stickers are made in flimsy, readily tearable form so as to inhibit theft.

One conventional composition previously used was urethane resin (ICI NEOREZ^{TM} R-960, an aqueous polyurethane dispersion), melamine crosslinker in butanol (Monsanto RESIMINE^{TM} 717), butanol and isopropanol as co-solvents, catalyst (NACURE^{TM} X49-110), and additives such as defoamant (NALCO^{TM} 75-J5325) and surfactant (FLUORAD^{TM} Fluorochemical Surfactant FC-120) and ultraviolet stabilizers (TINUVIN^{TM} 292 and SYNTASE^{TM} 100). This composition yields a durable clear coat, but exhibits an undesirably limited pot life, e.g., it would sometimes gel and/or cure on the coating apparatus and interfere with coating operations or result in unsatisfactory results, e.g., streaks. In addition, because of undesirable interactions among some co-solvents and other ingredients, the order of mixing components was critical. For instance, it is common to use catalysts that are acidic and hindered amine ultraviolet stabilizers that are relatively alkaline in a composition. Accordingly, a more easily used composition was desired.

Some previously known liquid coating compositions contain materials whose use is desirably reduced or eliminated. For instance, some compositions contain substantial amounts of free formaldehyde (as an excess of crosslinker) which presents certain health concerns. Another example is paratertiary butyl benzoic acid which is contained in some compositions but which can cause clogging of piping and also present certain health concerns.

For reasons of safety, coating compositions that are not flammable, or at most only relatively lowly flammable, are preferred. Typically, compositions that have a flash point of about 140°F (60°C) are considered moderately flammable and those that have a flash point below about 100°F (38°C) are considered flammable. Also, to reduce pollution, it is desirable to reduce or eliminate the volatile organic content of coating compositions. Even so-called "low solvent" versions of previously known coating compositions often have a volatile organic content as applied of about 490 to 500 grams/liter or more.

Currently, the need exists for new methods for forming protective clear coats on retroreflective articles utilizing coating compositions that have low volatile organic content to reduce pollution and that provide flexible, high quality clear coats so as to yield high efficiency retroreflective articles.

It was known to use compositions containing water-borne or aqueous dispersions of polyurethane and crosslinker as prime layers between the component layers of multilayer cover films of retroreflective sheetings or as a prime layer on cover films of retroreflective sheetings to improve the adhesion of graphics thereto or to improve the adhesion of the cover film to underlying components of the retroreflective sheeting. For instance, U.S. Patent No. 4,896,943 (Tolliver et al.) discloses the use of such a composition containing NEOREZ^{TM} 960 (a dispersion of water-borne aliphatic urethane) and crosslinker as a prime layer, e.g., about 2 microns thick, to improve the adhesion of a cover film to underlying binder layer of an encapsulated-lens retroreflective sheeting. The patent also discloses the use of such compositions on the outside surface of a cover film to improve the adhesion of inks thereto. Due to their thin character and relatively softer under layers (e.g., ethylene/acrylic acid), such coatings do not exhibit the abrasion resistance desired for some uses. In addition, U.S. Patent No. 5,066,098 (Kult et al.) discloses the use of a similar composition as the inner layer, e.g., having a thickness of between about 1.3 and 75 microns (0.05 and 3 mils) of a cover film of an encapsulated-lens retroreflective sheeting. Insofar as is known, all such compositions were free of ultraviolet stabilizers and ultraviolet absorbers.

The present invention provides a novel method for forming clear coats on retroreflective articles using a water-borne coating composition and also provides novel retroreflective articles with clear coats formed using the method. The invention also provides a class of water-borne coating compositions which are particularly useful therein.

In brief summary, a method of the invention comprises:
a) providing a base sheet comprising reflecting elements, typically arranged in a monolayer;
b) applying an aqueous, preferably low organic solvent content, coating composition comprising, and typically consisting essentially of, water, a water-borne dispersion of polyurethane, optionally crosslinker, optionally acrylic emulsion, and preferably an ultraviolet absorber onto the base sheet in the optical path; and
c) drying and curing the coating composition to yield the clear coat.
Another method of the invention comprises:
a) providing a forming surface;
b) applying an aqueous, preferably low organic solvent content, coating composition comprising, and typically consisting essentially of, water, a water-borne dispersion of polyurethane, optionally crosslinker, and optionally acrylic emulsion, and preferably an ultraviolet absorber, onto the forming surface;
c) drying and curing the coating composition to yield a clear coat, sometimes referred to herein is a "preformed clear coat"; and
d) forming a retroreflective base sheet on the clear coat.

Briefly summarizing, retroreflective articles of the invention comprise:
a) a base sheet comprising reflective elements, typically arranged in a monolayer; and
b) a clear coat formed from a water-borne dispersion of polyurethane in accordance with the method described herein, the clear coat being in the optical path of the retroreflective article.
One distinction of many embodiments of the invention over prior uses of liquid coating compositions with certain similarities (as well as certain differences) to those described herein, as well as the respective resultant clear coats, is that clear coats of the invention are relatively thicker than previous uses and may themselves essentially be the cover film of the retroreflective article rather than merely a prime layer or merely a partial member of a multilayer cover film of many times the thickness of the partial member.

In brief summary, the coating compositions of the invention preferably contain at most low organic solvent content and comprise:
a) water;
b) a water-borne dispersion of polyurethane;
c) preferably at least one aqueous compatible crosslinker;
d) preferably at least one acrylic emulsion; and
e) ultraviolet absorber.

The invention can be used to form a clear coat on license plates, e.g., before or after graphics have been applied to the face of the plate or sheeting to be used on the plate such as by printing and/or embossing and to form a clear coat on retroreflective sheetings which is receptive to certain coloring agents for subsequent application of graphics thereto.

Utilizing coating compositions as described herein can provide a number of important advantages. The compositions can be loaded with effective amounts of ultraviolet absorbers to protect underlying elements of retroreflective articles to which they are applied. They yield flexible coats and can thus be used on retroreflective sheetings that are wound into roll form or which are embossed, such as on license plates. With respect to the method of the invention, the coating compositions utilized therein are easily processed, enabling high quality clear coats to be readily formed. The coating compositions are water-reducible substantially without loss of gloss in the resultant film, i.e., they can be thinned with water. They do not rely upon catalysts (although catalysts may be used in some instances for faster cure if desired), thereby eliminating or reducing possible environmental hazards, cost, and difficult use in production. They have a relatively low volatile organics content. They are not flammable. They can be left in an opened container for several days without skinning. They can be readily cleaned up with water rinse unless dried on. They produce clear coats that provide high adhesion to many materials used in retroreflective base sheets, e.g., aziridine-crosslinked urethane-extended polyesters, and many currently used inks, e.g., alkyd crosslinked melamines, acrylic modified vinyls, and acrylics. They are cheaper than some conventional compositions. Moreover, in light of the low volatile organics content of the coating compositions used, the method of the invention can be easily practiced without expensive and complex pollution control measures. The resultant clear coats exhibit superior dirt resistance, gloss, depth of appearance, abrasion resistance, and scratch resistance. They are flexible, thereby increasing the potential conformability of the resultant retroreflective article. They are also embossable, exhibiting less "memory" than certain previously used cover film materials.

If desired, another advantage of the present invention is that clear coats provided as described herein can be used in place of thick preformed cover films such as are disclosed in U.S. Patent Nos. 3,190,178 (McKenzie), 4,025,159 (McGrath), and 4,664,966 (Bailey).

Preferred embodiments of the present invention are described in claims 1 to 24.

The invention will be further explained with reference to the drawing, wherein:
Figure 1 is a cross sectional illustration of a portion of a license plate on which a clear coat of the invention has been formed; and
Figure 2 is a cross sectional illustration of a portion of a retroreflective sheet on which a coating composition of the invention has been used to form a clear coat after application of a graphics pattern.

These figures, which are idealized, are not to scale and are intended to be merely illustrative and non-limiting.

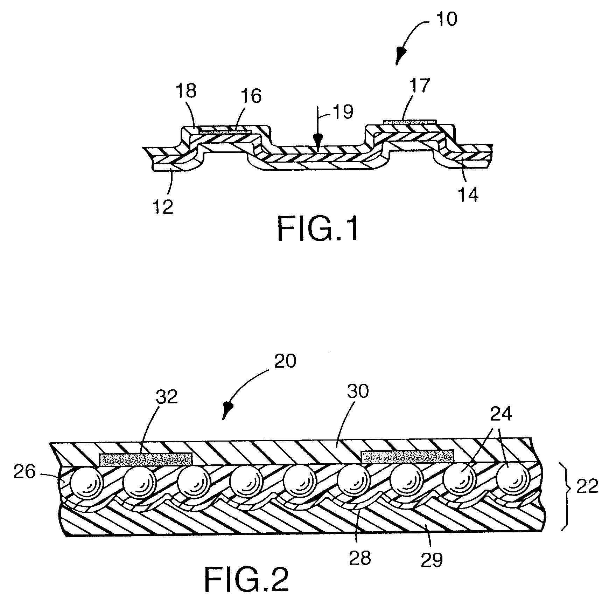

Figure 1 shows illustrative license plate 10 of the invention comprising metal sheet 12, retroreflective sheeting 14 applied thereto, optional embedded graphic image 16 applied over the embossed portions to provide desired legend, and clear coat 18 applied over the front of the plate. In some instances, optional surface graphic image 17 will be applied on the exterior surface of the clear coat of the invention. Light 19 incident to the face or front of plate 10 passes through clear coat 18 to base sheet 14 and is retroreflected back toward its source. Accordingly, clear coat 18 is referred to herein as being in the "optical path" of the base sheet, i.e., it is located so as to be within the path of light that can be retroreflected by the construction. Base sheet 14 may be retroreflective itself without clear coat 18 or may require assembly with clear coat 18 as shown in order to complete the optical structure necessary to provide retroreflection. In some instances, the base sheet may be somewhat retroreflective and the resultant article with the clear coat will exhibit higher retroreflective efficiency or brightness.

Figure 2 shows an illustrative retroreflective sheeting 20 of the invention comprising reflective base sheet 22 which comprises a monolayer of microspheres 24 with underlying space coat 26 and reflective layer 28, adhesive layer 29, clear coat 30 made from a coating composition in accordance with the invention, and graphic image 32. As shown in the Figure, in some embodiments of the invention, clear coat 30 is the only continuous layer (with the possible exception of space coat 26 or a binder layer (not shown)) in the optical path. Typically, the clear coat is the thickest layer in the optical path of the retroreflective article. In many embodiments, the clear coat is the exterior layer of the front face, i.e., retroreflective surface, of the retroreflective article.

As described above, one method of the invention for forming a clear coat on a retroreflective article comprises:
a) providing a base sheet comprising reflecting elements;
b) applying an aqueous coating composition comprising, and typically preferably consisting essentially of, water, a water-borne dispersion of polyurethane, optionally crosslinker, and optionally an acrylic emulsion, onto the base sheet in the optical path; and
c) drying and curing the composition to yield the clear coat.

This may be used to form a clear coat on any of a variety of retroreflective base sheets as desired. As used herein, a base sheet may initially be retroreflective (e.g., an encapsulated-lens or embedded-lens retroreflective article, a cube corner retroreflective article, etc.) or may provide retroreflection only after formation of the clear coat. Typically the base sheet will comprise a number of reflecting elements, e.g., microspheres with associated specularly reflective layers or cube corner elements, typically arranged in a monolayer.

An advantage of the invention is that the coating compositions can be applied to the base sheet using many convenient techniques, including for example dipping, spraying, flood coating, curtain coating, roll coating, bar coating, knife coating, wire-wound coating, gravure coating, using a flow bar, etc., to deposit a preferably continuous layer of coating composition on the surface of the base sheet. Those skilled in the art will be able to readily select one of these or other suitable application methods for specific applications. For instance, when the article is dipped in liquid coating composition, a clear coating can be readily formed that encapsulates the article, i.e., the front, back, edges, and attachment holes of a license plate, so as to protect the article. An advantage of the invention is that the relatively long pot life of the coating compositions enables use of a variety of convenient application techniques without problems of solvent release and difficult equipment operation restrictions encountered with previously used coating compositions.

After application to the base sheet, the composition is dried and cured to form the desired transparent clear coat. Depending upon the nature of the coating composition, drying and curing may be performed at room temperature or slightly elevated temperature without the use of special ovens or hoods. In some instances, e.g., when melamine crosslinkers are used as described below, drying and curing will be performed at elevated temperatures, e.g., at 250°F (120°C) or so for about 20 to 30 minutes or at 300°F (150°C) for about 1 to 4 minutes. The coating compositions described herein offer a number of processing advantages for formation of clear coats on retroreflective articles including being less flammable and being considered environmentally safer and presenting less objectionable odor because they have a lower volatile organic solvent content and contain solvents with less objectionable odor. They are capable of being cleaned up with water. Also, in some instances they are capable of drying and curing under room temperature conditions despite being water-based.

Alternatively, a retroreflective article with a clear coat can be made in accordance with the invention by the steps of:
a) providing a forming surface;
b) applying an aqueous coating composition comprising water, a water-borne dispersion of polyurethane, optionally crosslinker, and optionally acrylic emulsion, onto the forming surface;
c) drying and curing the coating composition as described above to yield the clear coat; and
d) laminating a retroreflective base sheet onto the clear coat, e.g., with an intermediate adherence layer.
U.S. Patent No. 4,664,966 (Bailey et al.) discloses a similar process using a different cover film. If desired, a retroreflective base sheet may be formed on the preformed clear coat, e.g., by arranging a monolayer of microspheres in polymeric binder material, forming a space coat, and applying a reflector layer thereon.

Coating compositions used in the invention may contain a water-borne dispersion of aliphatic polyurethanes or aromatic polyurethanes, or combinations thereof. Aliphatic polyurethanes are typically preferred because the clear coats formed therefrom typically exhibit greater durability, resistance to yellowing, etc. Illustrative examples of useful dispersions of polyurethane include NEOREZ^{TM} R960 (an aqueous dispersion of aliphatic polyurethane believed to contain 53.5 parts by weight water, 33 parts aliphatic polyurethane with a weight average molecular weight between about 100,000 and 250,000, 16.8 parts N-methylpyrrolidone, and 1.6 parts triethylamine, from ICI Resins) and NEOREZ^{TM} R9637 (another aqueous dispersion of aliphatic polyurethane from ICI Resins, believed to contain 48.6 parts by weight water, 36 parts aliphatic polyurethane with a weight average molecular weight between about 100,000 and 250,000, 8.5 parts N-methylpyrrolidone, and 2.0 parts triethylamine); and NEOREZ^{TM} R9679 (another aqueous dispersion from ICI Resins that is believed to be somewhat similar to the R9637 but exhibits greater chemical resistance).

The coating composition also typically contains one or more crosslinkers to increase weatherability and chemical resistance of the resultant clear coat. Illustrative examples thereof include melamine or aziridine. Aziridine crosslinkers typically tend to improve the tendency of the resultant clear coat to remain or lay flat, typically do not require high temperatures to cure, are easily cleaned up if still wet and the resultant clear coats can be incinerated or landfilled. Melamine crosslinkers typically provide longer pot life and shelf life, are believed to be less hazardous for shipping, are also easily cleaned up if still wet, and the resultant clear coats can be incinerated or landfilled. Blends of crosslinkers may be used if desired.

When melamine is used as crosslinker, coating compositions of the invention typically contain up to about 20, more typically about 4, weight percent melamine (i.e., typically between about 9 and about 11 weight percent based on resin solids). If too much melamine is used, or if the coating is baked too long or at too high a temperature, the resultant clear coat may be undesirably brittle if the resultant article is to be embossed. During drying and curing, such coating compositions should be baked, e.g., at about 300°F (150°C) for 1 to 4 minutes, or at about 250°F (120°C) for 20 to 30 minutes. An illustrative example of a suitable melamine crosslinker is RESIMENE^{TM} AQ7550 (an aqueous solution containing 78 to 80 parts methylated melamine formaldehyde and 20 to 22 parts water from Monsanto).

When aziridine is used as a crosslinker, coating compositions of the invention typically contain up to about 4 weight percent aziridine (i.e., typically between about 3 and about 9 weight percent based on resin solids). Coating compositions containing such crosslinkers typically exhibit shorter pot life than those containing melamine crosslinker. Such compositions can be allowed to dry and cure without special heating. Coated articles are preferably allowed to at least partially cure to a point sufficient to permit rolling or stacking without blocking. Full cure is typically achieved in about 2 days. If desired; combinations of crosslinker, e.g., about 1 part by weight melamine and 2 parts by weight aziridine, may be used. An illustrative example of a suitable aziridine crosslinker is CX-100, a polyfunctional aziridine, believed to be 100 percent solids, crosslinker from ICI.

If desired, blends of aziridine and melamine crosslinkers may be used to provide an optimum degree of durability-enhancing crosslinking without an undesirable increase in brittleness. With blends, clear coats exhibiting very good adhesion to a variety of base sheets with little or no tendency to curl can be readily obtained.

In some preferred instances, coating compositions used herein also contain an acrylic emulsion, e.g., of polymethyl methacrylate. An illustrative example of a suitable acrylic emulsion is NEOCRYL^{TM} A-612 (an acrylic emulsion from ICI containing about 32 weight percent solids, 28.9 volume percent solids, about 54 weight percent water, and about 13.8 weight percent volatile organic compounds). Other illustrative suitable emulsions include NEOCRYL^{TM} A-601 and A-614. The emulsion is preferably not styrenated, i.e, does not contain polystyrene. Clear coats made from coating compositions containing styrenated emulsions typically do not weather as well as those containing emulsions that are not styrenated. The improved embossability provided by embodiments containing acrylic emulsions is surprising as it was expected that compositions of polyurethane dispersions, acrylic emulsion, and aziridine crosslinker would have yielded clear coats which were too brittle to effectively emboss or handle conveniently. Instead, it has been found that the emulsion stiffens the resultant clear coat such that the resultant retroreflective article embosses with neater, sharper edges but without cracking and wrinkling. Use of an emulsion as described herein can also reduce costs as suitable emulsions are typically cheaper than polyurethane dispersions. Coating compositions of the invention with moderate amounts of aziridine crosslinker (e.g., 3 weight percent on resin solids) containing up to about 4 parts by resin weight of emulsion per 1 part by resin weight of dispersion are useful. Compositions containing substantially greater amounts of emulsion typically yield resultant clear coats which are too brittle for some applications.

The emulsions and polyurethane dispersions discussed herein may contain some amounts of organic solvents, e.g., typically about 8 to 10 weight percent or less, as co-solvents to facilitate mixing and handling. This limited quantity of solvent, however, represents a major reduction from the amount of solvent in coating compositions used for clear coats prior to the present invention. Previously used compositions typically contained 60 to 79 weight percent or more of organic solvent.

If desired, coating compositions used herein may contain one or more of the following added components: ultraviolet ("UV") absorber, UV stabilizer, surfactant, antifoamant, rheology modifier, anti-skinning agent, leveling agent, coloring agent (e.g., pigments or dyes), mar agent, rust inhibitor, thickener, flow agent, or biocide. Such components should be compatible with the water-borne urethane. An illustrative example of a suitable UV stabilizer is TINUVIN^{TM} 292 (a hindered amine light stabilizer containing bis(1,2,2,6,6-pentamethyl-4-piperdinyl)sebacate and methyl-1,2,2,6,6-pentamethyl-4-piperdinyl sebacate from CIBA-GEIGY). An illustrative example of a suitable UV absorber is TINUVIN^{TM} 1130 (containing the reaction product of beta-(3-(2H-benzotriazol-2-YL-4-hydroxy-5-tert-butylphenyl)proprionic acid, methyl ester and ethylene glycol 300 from CIBA-GEIGY). An illustrative example of a suitable surfactant is FLUORAD^{TM} Fluorochemical Surfactant FC-120 (containing 25 parts ammonium perfluoralkyl sulfonate, 37.5 parts 2-butoxyethanol, and 37.5 parts water). An illustrative example of a suitable antifoamant is NALCO^{TM} 2343 (containing 40 to 70 parts straight run-middle distillates, 10 to 50 parts blend of fatty acids, polyglycols, polyglycol ester, and oxyalkylate, and 10 to 20 parts kerosene from Nalco Company). "Biocide" is used herein to refer to mildew, bacteria, and fungus control agents.

Coating compositions used herein contain only low amounts, and are preferably substantially free, of organic solvents. Thus, they will typically have a volatile organics content ("VOC") of less than about 420, preferably less than 180, grams/liter, at application. VOC is the amount (in grams) of volatile photochemically reactive organic per unit volume of coating composition (minus water) and, determined based on ASTM D2369-81, is used by the U.S. Environmental Protection Agency to assess the environmental impact of coating compositions. "At application" refers to measurement of the VOC at the time the composition is being applied to a substrate, i.e., after thinning or cutting, etc.

Coating compositions used herein will typically have a flash point of at least 140°F (60°C), e.g., polyurethane/acrylic blends, preferably at least 200°F (93°C), e.g., polyurethane alone.

An illustrative example of a coating composition which has been found to be useful in accordance with the invention is a composition with the following formulation (amounts in parts by weight):
a) from about 20 to about 98 parts of aqueous polyurethane dispersion, e.g., NEOREZ^{TM} R960, NEOREZ^{TM} R9637, or NEOREZ^{TM} R9679;
b) up to about 20 parts of melamine crosslinker, e.g., RESIMENE^{TM} AQ7550, or up to about 4 parts of aziridine crosslinker, e.g., CX-100;
c) up to about 4.0 parts of a co-solvent such as N-methyl pyrrolidone, in addition to that, if any, in the polyurethane;
d) up to about 80 parts of acrylic emulsion;
e) up to about 2.0 parts of UV stabilizer, e.g., TINUVIN^{TM} 292;
f) up to about 3.0 parts of a UV absorber, e.g., TINUVIN^{TM} 1130;
g) up to about 0.2 parts of surfactant, e.g., FLUORAD^{TM} Fluorochemical Surfactant FC-120;
h) up to about 1.0 parts of antifoamant, e.g., NALCO^{TM} 2343; and
i) up to about 2.5 parts of deionized water to control viscosity.

The following formulation is expected to be generally useful for formation of a clear coat on vehicle license-plates after graphics have been formed thereon or prior to embossing (amounts in parts by weight):
a) 94.15 parts of aqueous polyurethane dispersion;
b) 3.53 parts of melamine crosslinker, e.g., AQ 7550;
c) 0.63 parts of N-methylpyrrolidone (sometimes referred to as "NMP");
d) 0.63 parts of TINUVIN^{TM} 292;
e) 0.93 parts of TINUVIN^{TM} 1130;
f) 0.03 parts of FLUORAD^{TM} Fluorochemical Surfactant FC-120;
g) 0.1 parts of NALCO^{TM} 2343; and
h) water as needed.

The following formulation is expected to be particularly useful for formation of a clear coat on vehicle license plates that are to be embossed after formation of the clear coat (amounts in parts by weight):
a) 47.39 parts of aqueous polyurethane dispersion;
b) 2.90 parts of aziridine crosslinker, e.g., CX100;
c) 0.63 parts of NMP;
d) 47.39 parts of acrylic emulsion;
e) 0.63 parts of TINUVIN^{TM} 292;
f) 0.93 parts of TINUVIN^{TM} 1130;
g) 0.03 parts of FLUORAD^{TM} Fluorochemical Surfactant FC-120;
h) 0.1 parts of NALCO^{TM} 2343; and
i) water as needed.

Before applying to the base sheet, coating compositions should be well mixed. Preferably mixing is done in such a manner as to avoid entrainment of air, and any bubbles formed during mixing are removed prior to applying the composition to the base sheet so as to ensure formation of a more uniform, defect-free clear coat.

Clear coats of the invention are typically at least about 10 microns (0.4 mil) thick or more. In contrast, prime layers on retroreflective articles made from somewhat similar formulations as the coating compositions described herein were typically less than about 2.5 to 5.0 microns (0.1 to 0.2 mil) thick. In addition, prime layers were not known to have contained UV absorbers, UV stabilizers, etc. In applications requiring multiyear durability such as license plates, the clear coat will be at least 25 microns (1 mil), preferably at least 50 microns (2 mils) thick. Typically clear coats of the invention are the thickest layer in the optical path of the retroreflective article. In many instances, the clear coats provided herein are the outermost layer of the front surface of the retroreflective article.

When making a license plate in accordance with the invention, the base sheet is typically-first adhered to a substrate such as an aluminum blank. The plate may be embossed and/or a graphic pattern applied before and/or after the clear coat is formed in accordance with the invention. If desired, however, the clear coat may be formed and then the resultant retroreflective sheet applied to the substrate and embossed. An advantage of clear coats of the invention is that they are receptive to a variety of ink formulations. Illustrative examples of inks which may be used on clear coats of the invention include alkyd-based inks, acrylic-based inks, etc.

In order to improve security and tamper resistance as well as abrasion resistance of stickers, issuing authorities generally desire that the distinguishing information; e.g., serial number, etc., be buried or embedded in the sticker. For instance, it would be desirable to print the information on the retroreflective base sheet and then apply a clear coating thereover. As mentioned above, previously known clear coat compositions had high organic solvent content that presented pollution and safety concerns as well as tended to degrade certain base sheet materials. The invention may be used to make stickers to signify registration and/or inspection of motor vehicles (e.g., automobiles and trucks), boats, recreational vehicles (e.g., snowmobiles, motorcross bikes, so-called "all terrain vehicles"), etc.

An illustrative example of a coating composition which is believed to be well suited for formation of a clear coat on tamper-resistant stickers in accordance with the invention is a composition with the following formulation (amounts in parts by weight):
a) about 47.4 parts of NEOREZ^{TM} R9637;
b) about 47.4 parts of NEOCRYL^{TM} A-612;
c) about 3.6 parts of a co-solvent such as N-methyl pyrrolidone;
d) about 0.6-part of TINUVIN^{TM} 292; and
e) about 1.0 part of TINUVIN^{TM} 1130.
One of the advantages of such formulations is that they have a low solvent content making them easier to use in small issuing shops and making it possible to utilize readily tearable base sheets (whose high tearability enhances security of the resultant sticker). Many conventional clear coat formulations cause thin base sheets to pucker and curl. An advantage of the present invention is that the clear coat formulations described herein can be used without causing puckering and curling. The formulations exhibit good flow characteristics lessening the problems with streaking such as are encountered with many previously known liquid coating compositions.

### Examples

The invention will be further explained by the following illustrative examples.

Unless otherwise indicated, all amounts are expressed in parts by weight.

### Example 1

This example illustrates the formation of clear coats on different retroreflective base sheets in accordance with the invention.

The following test methods were used as indicated.

### Dry Time

Dryness of applied clear coats was evaluated at 10 minute intervals by folding the article over upon itself to contact one portion of newly applied clear coat to another portion of newly applied clear coat. The elapsed time at which the clear coat article could be separated without sound is noted as dry time.

### Adhesion

Adhesion of the newly applied clear coat to underlying retroreflective base sheet was evaluated 4 days after application of the clear coat as follows. To render it visible, the surface of the clear coat was marked with a blue Sanford SHARPIE^{TM} Marker and then crosshatched with a razor blade completely through the clear coat and into the base sheet in an array of a first set of about 10 parallel cuts spaced about 2 millimeters apart at 45° to the intended peel direction and a second set of about 10 parallel cuts spaced about 2 millimeters apart, oriented perpendicularly to and intersecting the first set. A piece of adhesive tape (3M SCOTCH^{TM} No. 610 Transparent Cellophane Tape), narrower than the array of cuts, was applied over the clear coat with a 3M^{TM} PA-1 Plastic Applicator and then the tape was snapped off at 90°. A rating based upon how much of the clear coat was removed was assessed as follows: 0 for less than 10 percent removal, 1 for up to 25 percent removal, 2 for up to 50 percent removal, 3 for up to 75 percent removal, and 4 for up to 100 percent removal.

### Base Sheet Attack

Base Sheet Attack is an assessment of the degradation to the base sheet caused by an applied clear coat. It is evaluated as a visual assessment for evidence of degradation, e.g., puckering of the sheeting or white streaks within the sheeting.

### Solvent Resistance

Solvent Resistance is an assessment of a clear coat's resistance to degradation when contacted with solvent. To evaluate it 10 drops of the indicated solvent were applied to a horizontally disposed retroreflective article with clear coat such that the solvent would spread to a spot about 3 centimeters in diameter. Solvents used (with the abbreviations used below reported in parentheses) were: isopropyl alcohol (IPA), VM&P naphtha (VMP), unleaded gasoline (GAS), and xylene (XYL). After one minute the solvent spot was first blotted with a KAYDRY^{TM} Towel and then firmly rubbed by hand back and forth 10 times (20 total rubs) with the same towel. A visual inspection of the article was made and a rating based upon degree of visible damage to the clear coat was assessed as follows: 0 for essentially no damage, 1 for light damage, 2 for moderate damage, and 3 for heavy damage. A metered assessment of the article was made by measuring the retroreflective brightness of the article using a retroluminometer as described in U.S. Defensive Publication T987,003 at a divergence angle of about 0.2° and at an entrance angle of about -4°. Brightness is reported in candela/lux/meter².

### 60° Gloss

60° gloss was measured using a Pacific Scientific GLOSSGARD^{TM} II 60° Glossmeter from Gardner/Neotec Company, Instrument Division. The glossmeter was operated in accordance with manufacturer's directions. The method used was similar to ASTM D523-85 with some variations.

### Appearance

Appearance is a visual assessment of the general appearance of the clear coat after application. R is used to indicate presence of coating ribs, S for coating streaks, M for a matte surface, and P for orange peel effect.

### Thickness

The thicknesses of portions of the article to which clear coat had been applied and portions with no clear coat were measured using a caliper gauge and the difference taken to yield the thickness of the clear coat.

Retroreflective articles made with one of three different base sheets as indicated and one of two different clear coats as indicated were made and evaluated. The clear coat was formed by coating the indicated liquid coating composition onto the front surface of the base sheet at different wet thickness coatings and allowing it to dry at room temperature. The resultant dry thickness for each clear coat is reported in mils.

Base sheet A comprised a monolayer of glass microspheres whose rear surfaces were embedded in a polyvinyl butyral space coat and front surfaces were embedded in an alkyd binder layer with an additional alkyd top coat layer over the binder layer. Base sheet B comprised a monolayer of glass microspheres whose rear surfaces were embedded in a polyvinyl butyral space coat and front surfaces were embedded in a melamine alkyd/urethane binder layer, e.g., like SCOTCHLITE^{TM} 4790 License Plate Sheeting without the top film. Base sheet C comprised a monolayer of glass microspheres embedded in a polyvinyl butyral binder and space coat, e.g., like SCOTCHLITE^{TM} 3750 License Plate Sheeting.

Clear coat formulation A, an example of a liquid coating composition of the invention, had the following formulation: 47.4 parts NEOREZ^{TM} R9637, 47.4 parts NEOCRYL^{TM} A612, 3.6 parts N-methylpyrolidone, 0.6 part TINUVIN^{TM} 292, and 1.0 part TINUVIN^{TM} 1130. Clear coat formulation B, an example of a previously known solvent-borne coating composition was believed to have the following formulation: 44.56 parts of a short oil chain alkyd resin, 45.41 parts xylene, 2.73 parts aminoplast resin, 5.73 parts N-butanol, 0.64 part driers, 0.93 parts triethylamine, and additional xylene to adjust coating properties.

The resultant articles were allowed to dry at least 4 days prior to evaluation.

The results obtained with the different resultant retroreflective articles were as follows (each article is identified with a two character code, with the first letter representing the clear coat formulation and the second letter representing the base sheets):

**Table I**

| Article | Dry Time | Thickness | Adhesion | Base Attack | Appearance |
|---|---|---|---|---|---|
| AA1 | 10 | 0.1 | 2 | No | R |
| AA2 | 10 | 0.3 | 3 | No | |
| AA3 | 30 | 0.6 | 4 | No | |
| AB1 | 10 | 0.2 | 1 | No | R |
| AB2 | 10 | 0.3 | 0 | No | |
| AB3 | 30 | 0.8 | 0 | No | |
| AC1 | 10 | <0.1 | 0 | No | M |
| AC2 | 10 | 0.4 | 0 | No | S,M |
| AC3 | 30 | 0.9 | 0 | No | |
| BA1 | >60 | 0.1 | 1 | No | R |
| BA2 | >60 | 0.5 | 2 | No | |
| BA3 | >60 | 0.8 | 2 | Yes | |
| BA4 | >60 | 0.7 | 2 | Yes | |
| BB1 | >60 | 0.4 | 1 | No | R,S,M |
| BB2 | >60 | 0.4 | 1 | No | R,S,M |
| BB3 | >60 | 0.7 | 1 | Yes | R,S,M,P |
| BB4 | >60 | 1.1 | 1 | Yes | S,M |
| BC1 | >60 | 0.4 | 1 | No | S |
| BC2 | >60 | 0.2 | 1 | No | S,M |
| BC3 | >60 | 0.6 | 1 | Yes | M |
| BC4 | >60 | 1.0 | 1 | Yes | P |

As shown in these results, the solvent-based formulation took much longer to dry. In instances where thicker coatings were applied, the solvent-based clear coating composition was observed to have attacked the base sheet.

The gloss and solvent resistance of the resultant clear coats was found to be as follows:

**Table II**

| Solvent Resistance | | | | | | |
|---|---|---|---|---|---|---|
| Article | Gloss | Initial | IPA | VMP | GAS | XYL |
| AA1 | 77 | 80 | | | | |
| AA2 | 85 | 82 | | | | |
| AA3 | 86 | 81 | | | | |
| AB1 | 54 | 114 | | | | |
| AB2 | 79 | 95 | | | | |
| AB3 | 88 | 89 | 55(2) | 86(0) | 87(0) | 58(1) |
| AC1 | 50 | 63 | | | | |
| AC2 | 73 | 87 | | | | |
| AC3 | 84 | 79 | | | | |
| BA1 | 78 | 78 | | | | |
| BA2 | 98 | 81 | | | | |
| BA3 | 96 | 80 | 4(2) | 63(0) | 4(2) | 6(2) |
| BA4 | 99 | 83 | | | | |
| BB1 | 26 | 108 | | | | |
| BB2 | 32 | 70 | | | | |
| BB3 | 49 | 67 | 28(2) | 71(0) | 8(2) | 5(3) |
| BB4 | 57 | 73 | | | | |
| BC1 | 38 | 47 | | | | |
| BC2 | 37 | 64 | | | | |
| BC3 | 73 | 76 | | | | |
| BC4 | 88 | 74 | | | | |

The solvent resistance results include the retroreflective brightness (in candela/lux/meter²) of each resultant retroreflective article after formation of a clear coat, referred to as "Initial", and the resultant brightness of indicated samples after solvent resistance testing. The figures in parentheses are the visual rating assigned to the indicated samples after solvent resistance testing.

### Example 2

The embossability of retroreflective articles with clear coats of the invention was evaluated.

Retroreflective articles were made using base sheets B and C as described in Example 1.

Eight clear coats of the invention were used as follows:

**Table III**

| Clear Coat Formulation | | | | | | | | |
|---|---|---|---|---|---|---|---|---|
| Component | 1 | 2 | 3 | 4 | 5 | 6 | 7 | 8 |
| NEOREZ 9637 | 94.15 | 47.08 | 31.38 | 96.71 | 48.36 | 32.24 | 24.18 | 94.77 |
| AQ 7550 | 3.53 | 3.53 | 3.53 | 0 | 0 | 0 | 0 | 0 |
| CX 100 | 0 | 0 | 0 | 0.97 | 0.97 | 0.97 | 0.97 | 2.91 |
| NMP | 0.63 | 0.63 | 0.63 | 0.63 | 0.63 | 0.63 | 0.63 | 0.63 |
| NEOCRYL A-612 | 0 | 47.07 | 62.77 | 0 | 48.35 | 64.47 | 72.53 | 0 |
| TINUVIN 292 | 0.63 | 0.63 | 0.63 | 0.63 | 0.63 | 0.63 | 0.63 | 0.63 |
| TINUVIN 1130 | 0.93 | 0.93 | 0.93 | 0.93 | 0.93 | 0.93 | 0.93 | 0.93 |
| FC 120 | 0.03 | 0.03 | 0.03 | 0.03 | 0.03 | 0.03 | 0.03 | 0.03 |
| NALCO 2343 | 0.10 | 0.10 | 0.10 | 0.10 | 0.10 | 0.10 | 0.10 | 0.10 |

After coating, the articles with formulations 1-3 were dried for 5 minutes at 65°C (150°F) and then for 2 minutes at 150°C (300°F). After coating, the articles with formulations 4-8 were dried for 5 minutes at 65°C (150°F).

In comparative examples, conventional clear coat formulations having the following formulations were used: X is an extruded ethylene/acrylic acid clear coat (sometimes referred to as a top film) and Y is a solvent-based plasticized uncrosslinked polyvinyl chloride film.

The following test methods were used.

### Embossing Depth

Embossing depth (referred to in Table III as Emboss) was measured by adhering the indicated retroreflective sheeting (i.e., base sheet plus clear coat) to an aluminum blank using a conventional isooctyl acrylate/acrylic acid pressure sensitive adhesive and one day later embossing omega-like characters of varying depths using an Utsch die press. The maximum depth at which the clear coat did not crack was noted. The omega characters were each about 7.5 centimeters "cm" tall and 5.0 cm wide (3 by 2 inches). The depths tested were 1.00 to 2.75 millimeters in increments of 0.25 millimeters.

### Pop-Off

Pop-off is the maximum depth of the embossing at which the embossed sheeting would not tent or pop-off the substrate after 4 weeks at room temperature. The inside portion of the sheeting at points where the serif and vertical portions of the character met at a 45° acute angle are most subject to pop-off and were observed for this test.

### Scratch Resistance

Scratch resistance (referred to as "Scratch" in Table III) was measured using an Erichsen Hardness Tester. The grams force needed to cause a scratch in the clear coat was noted.

The articles were allowed to dry at least 7 days prior to evaluation. The results obtained are shown in Table IV.

**Table IV**

| Clear Coat | Base | Emboss | Pop-Off | Scratch |
|---|---|---|---|---|
| 1 | B | 2.75 | 2.00 | >400 |
| | C | 2.75 | 1.50 | >400 |
| 2 | B | 1.75 | 2.75 | >400 |
| | C | 1.5 | 2.75 | >400 |
| 3 | B | <1.0 | 2.75 | >400 |
| | C | <1.0 | 2.75 | >400 |
| 4 | B | 2.75 | 2.00 | >400 |
| | C | 2.75 | 1.75 | >400 |
| 5 | B | 2.75 | 2.50 | >400 |
| | C | 2.75 | 2.75 | >400 |
| 6 | B | 2.75 | 2.75 | >400 |
| | C | 2.75 | 2.75 | >400 |
| 7 | B | 2.75 | 2.75 | >400 |
| | C | 2.75 | 2.75 | >400 |
| 8 | B | 2.75 | 2.00 | >400 |
| | C | 2.75 | 1.75 | >400 |
| X | B | 1.75 | 2.00 | 150 |
| | C | 2.75 | 1.75 | 175 |
| Y | B | 2.75 | 2.50 | >400 |

All articles were observed to have generally acceptable retroreflective brightness, gloss, adhesion of clear coat to base sheet, and general appearance.

Various modifications and alterations of this invention will become apparent to those skilled in the art without departing from the scope and spirit of this invention.

## Claims

1. A method for forming a retroreflective article with a clear coat, said method characterized in that it comprises:
a) providing a base sheet comprising reflecting elements;
b) providing a clear coat formed from an aqueous coating composition comprising a water-borne dispersion of polyurethane, said clear coat being at least 10 microns thick; and
c) adhering said clear coat to said base sheet.

2. The method of claim 1 further characterized in one of the following:
a) said base sheet and said clear coat are first formed and then are laminated together; or
b) said clear coat is first formed and then said base sheet is formed thereon; or
c) said base sheet is first formed and then said clear coat is formed thereon.

3. The method of claim 1 or 2 further characterized in that said coating composition further comprises an acrylic emulsion.

4. The method of any of claims 1 to 3 further characterized in that said coating composition further comprises crosslinker.

5. The method of claim 4 further characterized in that said crosslinker comprises at least one of melamine or aziridine.

6. The method of claim 4 further characterized in at least one of the following:
a) said crosslinker is melamine and said composition comprises between about 9 and about 11 weight percent melamine, based on resin solids; or
b) said crosslinker is aziridine and said composition comprises between about 3 and about 9 weight percent aziridine, based on resin solids.

7. The method of claim 1 wherein said coating composition consists essentially of water, a water-borne dispersion of polyurethane, and crosslinker.

8. The method of any of claims 1 to 7 further characterized in at least one of the following:
a) said clear coat is at least about 25 microns thick; or
b) said clear coat is at least about 50 microns thick.

9. The method of any of claims 1 to 8 further characterized in at least one of the following:
a) said coating composition as applied has a volatile organics content of less than about 420 grams/liter; or
b) said coating composition as applied has a volatile organics content of less than about 180 grams/liter; or
c) said coating composition has a flash point of at least 140°F; or
d) said coating composition has a flash point of at least 200°F.

10. The method of any of claims 1 to 9 further characterized in that said coating composition further comprises at least one of the following: catalyst, ultraviolet absorber, ultraviolet stabilizer, mar agent, surfactant, antifoamant, rheology modifier, anti-skinning agent, leveling agent, coloring agent, rust inhibitor, thickener, flow agent, or biocide.

11. The method of claim 1 further characterized in that said coating composition is free of catalyst.

12. The method of claim 1 further characterized in that said coating composition comprises, in parts by weight:
a) from about 20 to 98 parts of an aqueous dispersion of polyurethane that comprises between about 48.6 and 53.5 parts of water, between about 33 and 36 parts of aliphatic polyurethane, between about 8.5 and 16.8 parts of N-methylpyrrolidone, between about 1.6 and 2.0 parts of triethylamine;
b) up to 20 parts of an aqueous solution of melamine crosslinker or up to 4 parts of an aqueous aziridine crosslinker;
c) up to 4.0 more parts of N-methyl pyrrolidone;
d) up to 2.0 parts of ultraviolet stabilizer;
e) up to 3.0 of ultraviolet absorber;
f) up to 0.2 part of surfactant;
g) up to 1.0 part of antifoamant; and
h) water.

13. The method of claim 12 further characterized in that said coating composition further comprises up to 80 parts by weight of acrylic emulsion.

14. The method of any of claims 1 to 13 further characterized in at least one of the following:
a) further comprises applying a graphic to said base sheet prior to applying said coating composition thereto; or
b) said method further comprises applying a graphic pattern to the external surface of said clear coat after said clear coat is formed; or
c) said base sheet is embossed prior to applying said coating composition thereto; or
d) said base sheet is embossed after applying said coating composition thereto.

15. A retroreflective article comprising a clear coat formed according to the method of any of claims 1 to 14.

16. The article of claim 15 further characterized in at least one of the following:
a) said article is a sign; or
b) said article is a license plate; or
c) said article is a sticker.

17. A retroreflective article characterized in that it comprises:
a) a base sheet comprising a monolayer of reflective elements; and
b) a clear coat formed from a water-borne dispersion of polyurethane, said clear coat being in the optical path of the retroreflective article, said clear coat being at least 10 microns thick.

18. The article of claim 17 further characterized in that said article exhibits higher retroreflective brightness than did said base sheet without said clear coat in place.

19. The article of claim 17 or 18 further characterized in at least one of the following:
a) said clear coat is at least 25 microns thick; or
b) said clear coat is at least 50 microns thick.

20. The article of any of claims 17 to 19 further characterized in that said clear coat was formed from a coating composition comprising water, a water-borne dispersion of polyurethane, and crosslinker.

21. The article of claim 20 further characterized in at least one of the following:
a) said coating composition further comprised at least one of melamine crosslinker or aziridine crosslinker; or
b) said clear coat further comprised an acrylic emulsion.

22. A liquid composition for forming clear coats on retroreflective articles characterized in that said coating comprises a water-borne dispersion of polyurethane, crosslinker, acrylic emulsion; and ultraviolet absorber.

23. The composition of claim 22 further characterized in that said composition comprises, in parts by weight:
a) between about 20 and about 98 parts of aqueous polyurethane dispersion;
b) up to about 20 parts of aqueous melamine crosslinker or up to about 4 parts of aqueous aziridine crosslinker;
c) up to about 4.0 parts of N-methylpyrrolidone;
d) between about 1 and about 80 parts of acrylic emulsion;
e) up to about 2.0 parts of ultraviolet stabilizer;
f) up to about 3.0 parts of ultraviolet absorber;
g) up to about 2.0 parts of surfactant;
h) up to about 1.0 part of antifoamant; and
i) water.

24. The composition of claim 23 further characterized in that said composition further comprises at least one of the following: catalyst, ultraviolet stabilizer, surfactant, mar agent, antifoamant, rheology modifier, anti-skinning agent, leveling agent, coloring agent, rust inhibitor, thickener, flow agent, or biocide.
